(19) **Europäisches Patentamt**
**European Patent Office**
**Office européen des brevets**

(11) **EP 1 934 447 B1**

(12) **FASCICULE DE BREVET EUROPEEN**

(45) Date de publication et mention
de la délivrance du brevet:
**11.02.2009 Bulletin 2009/07**

(21) Numéro de dépôt: **06831241.2**

(22) Date de dépôt: **28.09.2006**

(51) Int Cl.:
***F02B 77/08*** (2006.01)      ***F02D 41/22*** (2006.01)
***F01N 11/00*** (2006.01)

(86) Numéro de dépôt international:
**PCT/FR2006/050954**

(87) Numéro de publication internationale:
**WO 2007/042693 (19.04.2007 Gazette 2007/16)**

(54) **PROCEDE D'ESTIMATION DE LA TEMPERATURE D'ECHAPPEMENT D'UN MOTEUR ET PROCEDE DE DIAGNOSTIC D'UN CAPTEUR DE PRESSION CYLINDRE UTILISANT UNE ESTIMATION DE LA TEMPERATURE D'ECHAPPEMENT**

VERFAHREN ZUR SCHÄTZUNG EINER MOTORABGASTEMPERATUR UND VERFAHREN ZUR DIAGNOSE EINES ZYLINDERDRUCKSENSORS UNTER VERWENDUNG EINER ABGASTEMPERATURSCHÄTZUNG

METHOD FOR ESTIMATING AN ENGINE EXHAUST TEMPERATURE AND METHOD FOR DIAGNOSING A CYLINDER PRESSURE SENSOR USING AN EXHAUST TEMPERATURE ESTIMATE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.10.2005 FR 0510259**

(43) Date de publication de la demande:
**25.06.2008 Bulletin 2008/26**

(73) Titulaire: **RENAULT S.A.S.**
**92100 Boulogne Billancourt (FR)**

(72) Inventeurs:
• **EMERY, Pascal**
**F-92400 Courbevoie (FR)**
• **TALON, Vincent**
**F-78180 Montigny Le Bretonneux (FR)**

(56) Documents cités:
**EP-A- 1 431 546            EP-A- 1 528 241**
**DE-A1- 10 319 333      US-A1- 2004 030 485**
**US-A1- 2004 230 366**

## Description

L'invention concerne un procédé pour estimer la température d'échappement sur une sortie d'un cylindre d'un moteur à combustion interne, la dite sortie étant fermée par une soupape d'échappement susceptible de s'ouvrir pour laisser sortir des gaz présents à l'intérieur du cylindre, et le dit cylindre comprenant un vilebrequin transformant en rotation un mouvement de translation d'un piston monté coulissant dans le cylindre, le dit piston fermant une chambre de combustion du cylindre. L'invention concerne également un procédé de diagnostic d'un capteur de pression cylindre.

L'invention trouve une application particulièrement avantageuse dans le domaine des moteurs rotatifs à combustion interne (essence ou Diesel), à injection directe ou indirecte de carburant, et comprenant un ensemble de cylindres.

Les normes européennes antipollution deviennent de plus en plus sévères pour les moteurs automobiles. Il est donc important pour les constructeurs automobiles de réduire les émissions polluantes de leurs moteurs, sans toutefois négliger la consommation de carburant et les performances des moteurs. En conséquence, les dispositifs de dépollution à l'échappement deviennent de plus en plus importants, de plus en plus sophistiqués et de plus en plus chers.

Pour certains des dispositifs connus de dépollution et pour les stratégies d'optimisation des performances des moteurs, un des paramètres les plus importants est la température à l'échappement du moteur, encore appelée "température avant turbine". La température à l'échappement est utile par exemple pour la mise en oeuvre de stratégies de pilotage d'un filtre à particule ou d'un piège à NOx. La température à l'échappement est également utilisée pour garantir l'intégrité d'un turbocompresseur du moteur, en régulant le fonctionnement du turbocompresseur de sorte à limiter la température d'échappement. Elle est également utilisée pour maintenir un niveau donné de performance du moteur, ou pour corriger les dispersions en performance d'un moteur à l'autre, en agissant sur le débit de carburant injecté dans la chambre de combustion du moteur.

Actuellement, la température à l'échappement est mesurée par un capteur de température, implanté entre le moteur et la ligne d'échappement, ou entre le.moteur et le turbo compresseur, s'il existe. La présence de ce capteur augmente le coût d'un dispositif de dépollution.

Un autre des paramètres importants est la pression cylindre, à l'intérieur du cylindre du moteur, notamment au moment de l'ouverture de la soupape d'échappement laissant évacuer les gaz brûlés en direction de la ligne d'échappement. La pression cylindre est l'un des paramètres qui caractérise le mieux la phase de combustion au cours du cycle thermodynamique du moteur. Contrôler la phase de combustion permet de limiter la pollution à la source, c'est-à-dire en sortie du cylindre, et donc de limiter le vieillissement du dispositif de dépollution.

Il existe depuis peu en grande série des capteurs permettant de mesurer cette pression cylindre. Toutefois, la fiabilité de ces capteurs n'est actuellement pas garantie, et ces capteurs sont trop récents pour permettre un retour d'expérience intéressant. Si le capteur tombe en panne, l'injection de carburant n'est plus pilotée correctement ce qui entraîne un risque de casse moteur ; également, la pollution en sortie du moteur n'est plus maîtrisée, ce qui entraîne un vieillissement prématuré du dispositif antipollution.

Un objet principal de l'invention est de réduire le coût de la dépollution des gaz d'échappement d'un moteur à combustion interne, tout au long de la vie du moteur.

Pour cela, l'invention propose tout d'abord un procédé d'estimation de la température d'échappement. Ainsi, il n'est plus nécessaire de disposer d'un capteur pour connaître la température d'échappement. D'autres capteurs peuvent également être supprimés, notamment le capteur de pression collecteur. Le coût du dispositif de dépollution en est réduit d'autant.

Le procédé selon l'invention d'estimation de la température d'échappement, par ailleurs conforme au préambule ci-dessus, est caractérisé en ce qu'il comprend les étapes suivantes, consistant à :

- E1 : mesurer, à un instant précédent un instant d'ouverture de la soupape d'échappement, un angle de rotation du vilebrequin et une pression cylindre à l'intérieur de la chambre de combustion, et déterminer un volume de la chambre de combustion en fonction de l'angle de rotation,
- E2 : déterminer une masse d'air et un taux de gaz recirculés dans la chambre de combustion à l'instant d'ouverture, et en déduire une masse totale de gaz associée,
- E3 : déterminer une température cylindre à l'intérieur du cylindre en fonction de la pression cylindre, du volume de la chambre de combustion et de la masse totale de gaz à l'instant de l'ouverture de la soupape d'échappement,
- E4 : déterminer la température d'échappement en fonction de la température cylindre.

La température d'échappement est ainsi estimée à partir de la température à l'intérieur du cylindre, elle-même estimée à partir de la pression cylindre, de l'angle de rotation du vilebrequin à un instant proche de l'ouverture de la soupape d'échappement, de la masse d'air injectée dans le cylindre et du taux de gaz recyclés.

De préférence, la température d'échappement est calculée à partir de la température à l'intérieur du cylindre selon une relation linéaire de type $T_{ech} = A. T_{aoe} + B$. L'expérience montre de façon surprenante que le modèle linéaire, bien que très simple, est une bonne représentation de la relation entre la température d'échappement et la température à l'intérieur du cylindre.

L'invention propose également un procédé de diagnostic d'un capteur de pression cylindre, qui utilise une estimation de la température d'échappement et une mesure de la température d'échappement. Ainsi, la phase de combustion du moteur peut être régulée, la pollution en sortie du moteur peut être maîtrisée, la durée de vie d'un dispositif antipollution est ainsi prolongée, et une casse moteur est évitée.

Le procédé de diagnostic du capteur de pression cylindre est caractérisé essentiellement par les étapes suivantes, consistant à :

- mesurer une pression cylindre à un instant précédent une ouverture d'une soupape d'échappement du dit cylindre,
- estimer une température d'échappement à partir de la pression cylindre mesurée, en mettant en oeuvre un procédé selon l'une des revendications précédentes,
- mesurer une température d'échappement sur la sortie du cylindre,
- comparer la température d'échappement estimée et la température d'échappement mesurée, et en déduire un fonctionnement normal ou un état défectueux du capteur de pression cylindre.

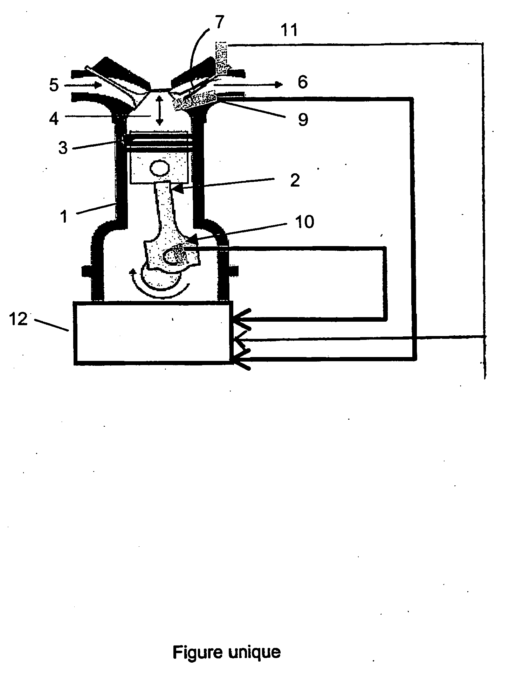

L'invention sera mieux comprise et d'autres caractéristiques et avantages apparaîtront à la lecture de la description qui va suivre, d'un exemple de mise en oeuvre d'un circuit de décharge et d'un étage de sortie de puissance selon l'invention. La description est à lire en relation au dessin annexé dans lequel la figure unique est un dispositif susceptible d'être utilisée pour la mise en oeuvre de procédés selon l'invention.

Sur la figure unique est représenté un dispositif susceptible d'être utilisé pour la mise en oeuvre de procédés selon l'invention.

Le dispositif comprend un cylindre 1 d'un moteur à combustion interne. A l'intérieur du cylindre, un vilebrequin 2 transforme en rotation un mouvement en translation du piston 3 monté coulissant et fermant une partie basse d'une chambre de combustion 4 formée à l'intérieur du cylindre 1. Le cylindre 1 comprend également une zone d'admission 5 pour permettre l'entrée des gaz dans la chambre de combustion 4 et une sortie 6 fermée par une soupape 7 susceptible de s'ouvrir pour laisser s'échapper les gaz brûlés (ou gaz d'échappement).

Le dispositif comprend également un capteur de pression 9 cylindre pour mesurer la pression des gaz à l'intérieur du cylindre, un capteur d'angle 10 pour mesurer un angle de rotation du vilebrequin.

Dans le cas où le dispositif est utilisé pour la mise en oeuvre du procédé de diagnostic du capteur de pression cylindre, le dispositif comprend également un capteur de température 11 pour mesurer la température des gaz d'échappement en sortie du cylindre. Ce capteur est inutile si le dispositif est utilisé seulement pour estimer la température des gaz d'échappement.

Le dispositif comprend enfin un dispositif de pilotage 12 pour recevoir une information des capteurs 9, 10, et éventuellement du capteur 11, et en déduire, selon le procédé mis en oeuvre, une température des gaz d'échappement en sortie du cylindre ou un état, normal ou défectueux, du capteur de pression cylindre.

Le dispositif de la figure unique permet de mettre en oeuvre procédé selon l'invention d'estimation de la température des gaz d'échappement comprenant les étapes suivantes, consistant à :

- E1 : mesurer, à un instant précédent un instant d'ouverture $t_{aoe}$ de la soupape d'échappement, l'angle de rotation $\theta_{aoe}$ du vilebrequin et la pression cylindre Paoe à l'intérieur de la chambre de combustion, et déterminer un volume Vaoe de la chambre de combustion en fonction de l'angle de rotation $\theta_{aoe}$.
- E2 : déterminer une masse d'air Mair et un taux de gaz recirculés TEGR dans la chambre de combustion à l'instant d'ouverture taoe, et en déduire une masse totale Mtot de gaz associée,
- E3 : déterminer une température cylindre Taoe à l'intérieur du cylindre en fonction de la pression cylindre Paoe, du volume Vaoe de la chambre de combustion et de la masse totale de gaz Mtot à l'instant de l'ouverture de la soupape d'échappement,
- E4 : déterminer la température d'échappement Tech en fonction de la température cylindre Taoe.

Le procédé d'estimation de la température d'échappement permet ainsi d'estimer simplement la température des gaz d'échappement en fonction de la pression cylindre.

On mesure tout d'abord la pression Paoe à l'intérieur du cylindre et l'angle de rotation $\theta_{aoe}$ du vilebrequin par les capteurs 9, 10, juste avant l'ouverture de la soupape d'échappement.

L'angle de rotation $\theta_{aoe}$ du vilebrequin permet de déterminer la hauteur du piston puis le volume Vaoe de la chambre de combustion à l'ouverture de la soupape d'échappement. Ceci peut être fait soit à partir d'une table, indiquant pour chaque valeur d'angle un volume associé, ou bien à partir d'un modèle mathématique.

On estime ensuite la masse d'air Mair et le taux de gaz recirculés TEGR admis dans le cylindre juste avant l'ouverture de la soupape. Ceci peut être fait à partir d'une table ou d'un modèle mathématique, en fonction de l'angle de rotation du vilebrequin et de paramètres du moteur. Il est également possible de mesurer la masse d'air Mair et le taux de gaz recirculés TEGR, à partir de capteurs appropriés situés dans la zone d'amission.

La masse d'air et le taux de gaz recirculés permettent de déterminer la masse totale de gaz à l'intérieur du cylindre à l'instant de l'ouverture de la soupape : Mtot = Mair / (1 - TEGR) (on néglige ici la masse de carburant injectée dans le cylindre à l'instant de l'ouverture de la soupape).

On en déduit ensuite la température à l'intérieur du cylindre, en supposant les gaz parfaits : Taoe = Paoe * Vaoe / (r*Mtot), r étant une constante, dépendant notamment de la constante des gaz parfaits et de la masse molaire des gaz dans le cylindre.

L'expérience a montré qu'il est possible d'estimer la température d'échappement à partir de la température à l'intérieur du cylindre à l'ouverture de la soupape par la relation linéaire suivante : Tech = A. Taoe + B. A et B sont deux constantes, liées notamment aux caractéristiques physiques du cylindre. A et B peuvent être déterminés expérimentalement, par exemple au cours d'une étape d'initialisation du procédé.

Le dispositif de la figure unique permet également la mise en oeuvre d'un procédé selon l'invention de diagnostic du capteur pression cylindre 9.

Pour cela on, complètement simplement le dispositif de la figure par un capteur de température, placé sur la sortie 6 du cylindre.

Le procédé de diagnostic selon l'invention comprend les étapes suivantes, consistant à :

* mesurer une pression cylindre à un instant précédent une ouverture d'une soupape d'échappement du dit cylindre,

* estimer une température d'échappement à partir de la pression cylindre mesurée, en mettant en oeuvre un procédé selon l'une des revendications précédentes,

* mesurer une température d'échappement sur la sortie du cylindre,

* comparer la température d'échappement estimée et la température d'échappement mesurée, et en déduire un fonctionnement normal ou un état défectueux du capteur de pression cylindre, selon que la différence entre la température estimée et la température mesurée est inférieure ou supérieure à une valeur prédéfinie.

On comprendra aisément que la fiabilité du diagnostic du capteur pression est fortement dépendant de la fiabilité du capteur de température. Toutefois, comme le capteur pression travaille en milieu hostile (forte température et forte pression à l'intérieur du cylindre), la probabilité pour que le capteur pression soit en défaut est beaucoup plus importante que la probabilité que le capteur température soit en défaut. De plus, le capteur de température des gaz d'échappement peut être diagnostiqué par d'autres moyens, connus et utilisés par ailleurs. Ce qui n'est pas le cas du capteur pression cylindre.

**Revendications**

**1.** Procédé pour estimer la température d'échappement sur une sortie (6) d'un cylindre (1) d'un moteur à combustion interne, la dite sortie étant fermée par une soupape d'échappement (7) susceptible de s'ouvrir pour laisser sortir des gaz présents à l'intérieur du cylindre, et le dit cylindre comprenant un vilebrequin (2) transformant en rotation un mouvement de translation d'un piston (3) monté coulissant dans le cylindre, le dit piston fermant une chambre de combustion (4) du cylindre, le procédé étant **caractérisé en ce qu'**il comprend les étapes suivantes, consistant à :

> • E1 : mesurer, à un instant précédent un instant d'ouverture (t$_{aoe}$) de la soupape d'échappement, un angle de rotation (θ$_{aoe}$) du vilebrequin et une pression cylindre (Paoe) à l'intérieur de la chambre de combustion, et déterminer un volume (Vaoe) de la chambre de combustion en fonction de l'angle de rotation (θ$_{aoe}$),
> • E2 : déterminer une masse d'air (Mair) et un taux de gaz recirculés (TEGR) dans la chambre de combustion à l'instant d'ouverture (taoe), et en déduire une masse totale (Mtot) de gaz associée,
> • E3 : déterminer une température cylindre (Taoe) à l'intérieur du cylindre en fonction de la pression cylindre (Paoe), du volume (Vaoe) de la chambre de combustion et de la masse totale de gaz (Mtot) à l'instant de l'ouverture de la soupape d'échappement,
> • E4 : déterminer la température d'échappement (Tech) en fonction de la température cylindre (Taoe).

**2.** Procédé selon la revendication précédente, dans lequel, lors de l'étape E4, pour déterminer la température d'échappement en fonction de la température cylindre, on utilise une relation linéaire (Tech = A. Taoe + B).

**3.** Procédé selon l'une des revendications précédentes, dans lequel, au cours de l'étape E3, la masse d'air et / ou le taux de gaz recirculés sont estimés en fonction de l'angle de rotation du vilebrequin à partir d'une table ou à partir d'un modèle mathématique, ou sont mesurés.

**4.** Procédé selon l'une des revendications précédentes, dans lequel, au cours de l'étape E2, la masse totale de gaz est obtenue selon la relation : Mtot = Mair / (1 - TEGR).

**5.** Procédé de diagnostic d'un capteur de pression cylindre situé à l'intérieur d'un cylindre d'un moteur à combustion interne, le dit cylindre comprenant une sortie fermée par une soupape d'échappement susceptible de s'ouvrir pour laisser sortir des gaz présents à l'intérieur du cylindre, le procédé de diagnostic étant **caractérisé en ce qu'**il comprend les étapes suivantes, consistant à :

• mesurer une pression cylindre à un instant précédent une ouverture d'une soupape d'échappement du dit cylindre,

• estimer une température d'échappement à partir de la pression cylindre mesurée, en mettant en oeuvre un procédé selon l'une des revendications précédentes,

• mesurer une température d'échappement sur la sortie du cylindre,

• comparer la température d'échappement estimée et la température d'échappement mesurée, et en déduire un fonctionnement normal ou un état défectueux du capteur de pression cylindre.

**Claims**

1. Method for estimating the exhaust temperature at an outlet (6) of a cylinder (1) of an internal combustion engine, the said outlet being closed by an exhaust valve (7) which can open to let out gases present inside the cylinder, and the said cylinder comprising a crankshaft (2) converting to rotation a translational movement of a piston (3) mounted such that it can slide in the cylinder, the said piston closing a combustion chamber (4) of the cylinder, the method being **characterized in that** it comprises the following steps, consisting in:

    • S1: measuring, at a time preceding a time of opening ($t_{BBDC}$) of the exhaust valve, an angle of rotation ($\theta_{BBDC}$) of the crankshaft and a cylinder pressure ($P_{BBDC}$) inside the combustion chamber, and determining a volume ($V_{BBDC}$) of the combustion chamber according to the angle of rotation ($\theta_{BBDC}$);
    • S2: determining a mass of air (Mair) and a proportion of recycled gases (TEGR) in the combustion chamber at the time of opening ($t_{BBDC}$), and deducing from this a related total mass (Mtot) of gas;
    • S3: determining a cylinder temperature ($T_{BBDC}$) inside the cylinder according to the cylinder pressure ($P_{BBDC}$), the volume ($V_{BBDC}$) of the combustion chamber and the total mass of gas (Mtot) at the time of the opening of the exhaust valve;
    • S4: determining the exhaust temperature (Texh) according to the cylinder temperature ($T_{BBDC}$).

2. Method according to the preceding claim, in which, during step S4, for determining the exhaust temperature according to the cylinder temperature, a linear equation ($Texh = A.T_{BBDC} + B$) is used.

3. Method according to either of the preceding claims, in which, during step S3, the mass of air and/or the proportion of recycled gases are/is estimated according to the angle of rotation of the crankshaft from a table or from a mathematical model, or are/is measured.

4. Method according to one of the preceding claims, in which, during step S2, the total mass of gas is obtained from the equation:

$$Mtot = Mair / (1 - TEGR).$$

5. Method for testing a cylinder pressure sensor located inside a cylinder of an internal combustion engine, the said cylinder comprising an outlet closed by an exhaust valve which can open to let out gases present inside the cylinder, the method for testing being **characterized in that** it comprises the following steps, consisting in:

    • measuring a cylinder pressure at a time preceding an opening of an exhaust valve of the said cylinder;
    • estimating an exhaust temperature from the measured cylinder pressure, employing a method according to one of the preceding claims;
    • measuring an exhaust temperature at the outlet of the cylinder;

comparing the estimated exhaust temperature and the measured exhaust temperature, and deducing from this a normal operation or a defective condition of the cylinder pressure sensor.

**Patentansprüche**

1. Verfahren zum Schätzen der Auslasstemperatur an einem Auslass (6) eines Zylinders (1) einer Brennkraftmaschine, wobei der Auslass durch ein Auslassventil (7) verschlossen ist, das sich öffnen kann, um Gase, die im Zylinder vorhanden sind, auszulassen, und wobei der Zylinder eine Kurbelwelle (2) aufweist, die eine translatorische Bewegung eines Kolbens (3), der in dem Zylinder gleitend angebracht ist, in eine Drehung umwandelt, wobei der Kolben eine Brennkammer (4) des Zylinders verschließt, wobei das Verfahren **dadurch gekennzeichnet ist, dass** es die folgenden Schritte enthält, die darin bestehen:

    - E1: zu einem Zeitpunkt, der einem Öffnungszeitpunkt (taoe) des Auslassventils vorhergeht, einen Drehwinkel ($\theta_{aoe}$) der Kurbelwelle und einen Zylinderdruck (Paoe) in der Brennkammer zu messen und ein Volumen (Vaoe) der Brennkammer in Abhängigkeit vom Drehwinkel ($\theta_{aoe}$)

zu bestimmen,

- E2: eine Luftmasse (Mair) und einen Rückführungsgasanteil (TEGR) in der Brennkammer zum Öffnungszeitpunkt (taoe) zu bestimmen und daraus eine zugehörige Gesamtgasmasse (Mtot) abzuleiten,

- E3: eine Zylindertemperatur (Taoe) in dem Zylinder als Funktion des Zylinderdrucks (Paoe), des Volumens (Vaoe) der Brennkammer und der Gesamtgasmasse (Mtot) zum Öffnungszeitpunkt des Auslassventils zu bestimmen,

- E4: die Auslasstemperatur (Tech) als Funktion der Zylindertemperatur (Taoe) zu bestimmen.

2. Verfahren nach dem vorhergehenden Anspruch, in dem im Schritt E4 für die Bestimmung der Auslasstemperatur als Funktion der Zylindertemperatur eine lineare Beziehung (Tech = A · Taoe + B) verwendet wird.

3. Verfahren nach einem der vorhergehenden Ansprüche, in dem im Schritt E3 die Luftmasse und/oder der Rückführungsgasanteil als Funktion des Drehwinkels der Kurbelwelle anhand einer Tabelle oder anhand eines mathematischen Modells geschätzt werden oder gemessen werden.

4. Verfahren nach einem der vorhergehenden Ansprüche, in dem im Schritt E2 die Gesamtgasmasse gemäß der folgenden Beziehung erhalten wird: Mtot = Mair/(1 - TEGR).

5. Verfahren für die Diagnose eines Zylinderdrucksensors, der sich in einem Zylinder einer Brennkraftmaschine befindet, wobei der Zylinder einen Auslass besitzt, der durch ein Auslassventil verschlossen ist, das sich öffnen kann, um in dem Zylinder vorhandene Gase auszulassen, wobei das Diagnoseverfahren **dadurch gekennzeichnet ist, dass** es die folgenden Schritte enthält, die darin bestehen:

    - einen Zylinderdruck zu einem Zeitpunkt, der einem Öffnen des Auslassventils des Zylinders vorhergeht, zu messen,

    - eine Auslasstemperatur anhand des gemessenen Zylinderdrucks zu schätzen, indem ein Verfahren nach einem der vorhergehenden Ansprüche ausgeführt wird,

    - eine Auslasstemperatur am Auslass des Zylinders zu messen,

    - die geschätzte Auslasstemperatur und die gemessene Auslasstemperatur zu vergleichen und daraus einen Normalbetrieb oder einen fehlerhaften Zustand des Zylinderdrucksensors abzuleiten.

7 11

5 6

4 9

3

1 2

10

12

Figure unique